# EUROPÄISCHE PATENTSCHRIFT

(11) **EP 1 109 001 B1**
(45) Veröffentlichungstag und Bekanntmachung des Hinweises auf die Patenterteilung: **16.03.2005**
(21) Anmeldenummer: 00811135.3
(22) Anmeldetag: 30.11.2000
(51) Int. Cl.: G01L 23/30

(54) **Verfahren zur Bestimmung des oberen Totpunktes einer Brennkraftmaschine mit neuronalem Lernen**
Procedure for determining the top dead centre of a combustion engine with neural learning
Procédé de détermination du point mort haut d'un moteur à combustion avec des études neuronales

(30) Priorität: 15.12.1999 CH 992297
(43) Veröffentlichungstag der Anmeldung: 20.06.2001
(73) Patentinhaber: Kistler Holding AG, 8408 Winterthur (CH)
(72) Erfinder: Zanetti, Markus, 8500 Frauenfeld (CH)

(56) Entgegenhaltungen:
- DE-A- 2 655 064
- US-A- 5 093 792

## Beschreibung

Die Erfindung betrifft ein Verfahren zur genauen Bestimmung des oberen Totpunktes (OT) einer Brennkraftmaschine aus dem Zylinderinnendruckverlauf.
Der obere Totpunkt (OT), genauer derjenige am Ende der Kompressionsphase, ist bekanntlich eine wichtige Grösse im Zyklus einer Kolbenbrennkraftmaschine, z.B. für die Berechnung der Zylinderleistung. Seine direkte Bestimmung ist aufwendig und, besonders bei mehrzylindrigen Maschinen, relativ ungenau. Es ist daher schon vorgeschlagen worden, den OT aus dem Zylinderinnendruckverlauf zu bestimmen - K. Wehner "Bestimmung des dynamischen OT aus dem Zylinderinnendruckverlauf von Verbrennungsmotoren", IBZ e.V.;(Innovations und Bildungszentrum, eingetragener Verein in Deutschland; erschienen 1996). Bei diesem bekannten Verfahren wird eine mit dem Ansatz der idealen adiabatischen Zustandsänderungen errechnete Kurve des Zylinderinnendruckes mit der gemessenen Kurve verglichen; die Parameter der errechneten Kurve werden dann iterativ so lange verändert, bis eine ausreichende Übereinstimmung mit der gemessenen Kurve erreicht ist. Als letzter Schritt wird der mit dem Annäherungsverfahren berechneten OT in die gemessene Kurve übernommen. Zum einen erfordert dieses Verfahren einen erheblichen Rechenaufwand, und zum anderen vernachlässigt dieser Ansatz die realen Bedingungen während des Betriebs eines Motors, wie z. Beispiel Wärmeverluste des Gases, Gasverluste - d.h. Leckagen - und Verformungen des Motors. Zwar können diese Fehler über Erfahrungswerte oder mathematische Modelle zum Teil kompensiert werden; dies führt aber zu einer noch höheren, geforderten Rechenleistung.

Aufgabe der Erfindung ist es daher, ein Verfahren zur Bestimmung des OT aus dem Zylinderinnendruckverlauf zu schaffen, das einen relativ geringen Rechenaufwand erfordert, und bei dem das reale Motorverhalten berücksichtig wird.

Erfindungsgemäss wird diese Aufgabe mit den Merkmalen von Anspruch 1 gelöst.

Liegt einmal ein korrekt trainiertes wissensbasiertes System vor, so erfordert die OT-Erkennung auch für nicht trainierte Betriebspunkte und gegebenenfalls für unterschiedliche maschinenspezifische Parameter lediglich eine Messung des Zylinderinnendruckverlaufes und eine Eingabe der Druckwerte in das wissensbasierte System, welches gelernt hat, diesen den richtigen OT zuzuordnen.

In den Unteransprüchen sind vorteilhafte Weiterbildungen der Erfindung beansprucht. So kann die Struktur des wissensbasierten Systems und der Trainingsaufwand verringert werden,.wenn für Maschinen eines Maschinentyps, beispielsweise für Grossdieselmotoren, bei denen die maschinenspezifischen Parameter gleich sind, nur der Zylinderinnendruckverlauf als Eingangsgrösse zum Trainieren des wissensbasierten Systems und für die OT-Erkennung in dem trainierten System benutzt wird. Zur Überprüfung, ob das wissensbasierte System ausreichend trainiert ist, hat es sich als zweckmässig erwiesen, wenn die Menge der einander zugeordneten Paare aus Zylinderinnendurck und OT-Zeitpunkt der direkten Messung in Teilmengen unterteilt wird, von denen mindestens eine zur Kontrolle der Verallgemeinerungsfähigkeit des wissensbasierten System verwendet wird.

Die Genauigkeit des Trainings und der OT-Erkennung im "Betrieb" lassen sich steigern, wenn der Verlauf des Zylinderinnendrucks gegenüber dem OT-Zeitpunkt während des Trainings des Systems definiert zeitlich verzögert wird, - so dass der OT-Zeitpunkt in die Kompressionsphase fällt, und das wissensbasierte System auf einen OT in der Kompresssionsphase trainiert wird -, und wenn dieser gewollte systematische Fehler während des Betriebs mit dem unveränderten, trainierten, wissensbasierten System rückgängig gemacht wird. Weiterhin wird die OT-Erkennung durch das wissensbasierte System verbessert, wenn die elektrische Eigenschaften der Messanordnung, beispielsweise die Filterfrequenz, bei der Aufnahme des Zylinderinnendruckverlaufes und der direkten OT-Zeitpunkt-Messung einerseits und während des Betriebes, d.h. bei der OT-Zeitpunkterkennung in unbekannten Betriebszuständen und/oder nicht trainierten, maschinenspezifischen Parametern, andererseits möglichst identisch gestaltet werden.

Die Berechnung der Zylinderleistung lässt sich vereinfachen, wenn der Verlauf des Zylinderinnendrucks mit einer linearen Gradskala in Grad Kurbelwinkel (°KW) kombiniert wird, die auf den aus dem Zylinderinnendruck ermittelten OT-Zeitpunkt zurückbezogen wird. Ist eine solche Vereinfachung zu ungenau, so kann die lineare Gradskala mit Hilfe eines weiteren wissensbasierten Systems an die Krümmungen ihres tatsächlichen Verlaufes über den Zeitbereich angepasst werden.

Es seien nun noch die Bedeutung und der "Umfang" einiger in diesen Unterlagen verwendeten Begriffe festgelegt:

"Zylinderinnendruckverlauf" umfasst nicht nur die direkte Messung dieser Grösse, sondern auch andere, von ihr abhängige, messbare Grössen, wie z.Beispiel die Dehnung in einem Zylinderdeckelbolzen (EP-A-0170.256) oder im Zylindereinsatz (EP-B-0671.618) sowie der Druck zwischen Zylinderdeckel und Bolzenmutter (US-A-5,179,857) oder eine Längenänderung zwischen zwei Wänden des Zylinderdeckels (EP-A-0175.449).

"Verschiedene Betriebspunkte" werden durch Änderungen von beispielsweise Drehzahl, Kraftstoffgemisch, Einspritzzeitpunkt, zündzeitpunkt, Belastung, Ladedruck und/oder Temperatur erreicht, wobei die Temperatur immer im Gleichgewichtszustand, d.h. nach dem "Anfahren" erfasst wird. Weitere Betriebszustände ergeben sich aus der Anzahl der Betriebsstunden des jeweiligen Motors.

"Wissensbasierte Systeme" sind zum Beispiel künstliche, neuronale Netze (NN), Neuro-Fuzzy-Systeme oder Fuzzy-Systeme, wobei bei Fuzzy-Systemen das Prozesswissen gezielt eingegeben wird; bei Neuro-Systemen muss das System sich das Prozesswissen, anhand der Trainingsphase, selber aneignen. Zu den "maschinenspezifischen Parametern" gehören geometrische Abmessungen - wie Zylinderbohrung und Kolbenhub - sowie Verdichtung und gegebenenfalls weitere Kenndaten eines Motorentyps.

Im folgenden wird die Erfindung anhand eines Ausführungsbeispiels im Zusammehang mit der Zeichnung näher erläutert.

Es zeigen:
- Fig. 1: schematisch eine Anordnung zur direkten Messung des OT mittels eines kapazitiven OT-Sensors im Schleppbetrieb eines Motors,
- Fig. 2: in gleicher Darstellung eine Anordnung für die Messdatenaufnahme, bei der jedem Zeit- bzw. Kurbelwinkel-Wert ein Druckwert zugeordnet wird, und diese Zuordnungen als digitale Wertepaare abgespeichert werden,
- Fig. 3: ebenfalls in gleicher Darstellung, eine Anordnung zur Bestimmung des OT allein aus dem Zylinderinnendruck mit Hilfe eines trainierten, wissensbasierten Systems, hier eines neuronalen Netzes (NN) sowie zur Berechnung der Zylinderleistung aus dem erhaltenen OT;
- Fig. 4: die Schwankungen der Drehgeschwindigkeit ω der Kurbelwelle im Bereich des OT während der Kompression und nach einer Zündung; der Kurbelwinkel ist dabei auf den OT-Zeitpunkt zurückbezogen,
- Fig. 5: ein Diagramm einer Aufzeichnung eines digitalen Oszilloskops mit einer Messreihe der Anordnung nach Fig. 1,
- Fig. 6: einen vergrösserten Ausschnitt aus Fig. 5,
- Fig. 7: ein gleiches Diagramm für eine Messwertaufnahme mit der Anordung nach Fig. 2,
- Fig. 8.: eine Anzahl von OT-Bestimmungen bei Betriebszuständen, auf die das neuronale Netz vorher nicht trainiert worden war; auch hier ist die OT-Erkennnung auf den direkt gemessenen OT (Fig. 1 und 5) als Nullpunkt bezogen.

Die Verifizierung des neuen Verfahrens erfolgt an einem einzylindrigen Viertakt-Benzin-Motor, der jeweils durch eine Zündspule fremdgezündet wird. Seine Bohrung beträgt etwa 95 mm; die Verdichtung ist etwa 10:1. Er hat einen Hub von etwa 9 cm.

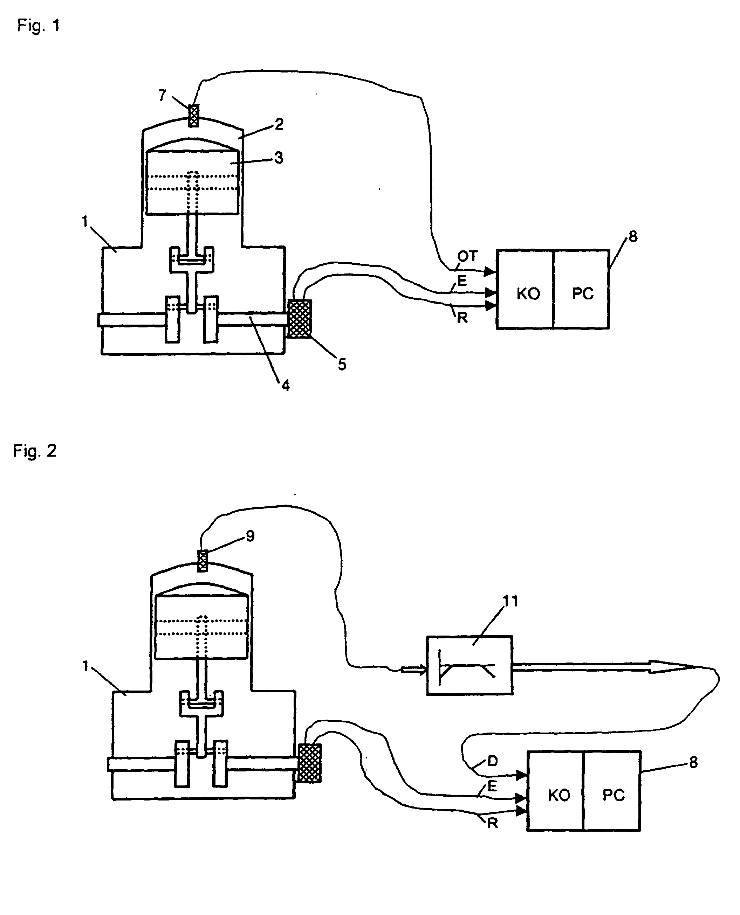

In Fig. 1 ist der Motor 1 schematisch mit einem Zylinder 2 gezeigt, in dem sich ein Kolben 3 bewegen kann. Dieser ist mit einer Kurbelwelle 4 verbunden, an derem rechten Ende ein Kurbelwinkelsensor oder Drehgeber 5 montiert ist. Es handelt sich bei diesem um ein im Handel erhältliches Gerät der Anmelderin mit der Typenbezeichnung 2612. Der Drehgeber 5 gibt zum einen pro Umdrehung der Welle 4 ein Signal, das als Referenzsignal R bezeichnet ist. Als zweites Signal wird in dem Drehgeber 5 ein Signal E erzeugt, welches ausgehend jeweils von einem Referenzsignal - gewissermassen als Nullpunkt - pro Grad Kurbelwinkel (°KW) eine Winkelmarke in Form eines Rechteckimpulses erzeugt und damit, beispielweise bei Drehzahlschwankungen der Welle 4 während einer Umdrehung, die Messgenauigkeit erhöht.

Im Zylinderdeckel ist ein weiterer Sensor 7 angeordnet, der in Fig. 1 in einem kapazitiven Sensor zur direkten OT-Messung besteht; sein Signal ist mit OT bezeichnet. Auch dieser Sensor 7 ist ein Produkt der Anmelderin und unter der Typen-Bezeichnung 2629 erhältlich. Er kann nur im geschleppten Betrieb des Kolbens 3 eingesetzt werden, da er im gezündeten Betrieb zerstört würde.

Alle drei Signale R, E und OT werden beispielsweise einem Signalverarbeitungs- und Anzeigegerät 8 zugeführt, welches im vorliegenden Beispiel ein handelsübliches digitales Kathodenstrahloszilloskop KO sowie einen Rechner PC enthält. In diesem wird für eine hohe Auflösung, und damit zur Erzielung der erforderlichen Genauigkeit der Zuordnung, das von dem Drehgeber 5 ausgegebene Zeitsignal E und R sowie das OT-Signal OT gleichzeitig mit einer Vielzahl - z.Beispiel pro Umdrehung der Welle 4 mit einigen zehntausend Einzelimpulsen abgetastet. Diese Einzelimpulse werden in dem Oszilloskop KO gegliedert und anschliessend dem Rechner PC übermittelt, in dem die Zuordnung OT-Zeitpunkt vom OT-Sensor zum Drehgebersignal E und R durchgeführt wird. Diese Messungen mit dem Sensor 7 im geschleppten Betrieb des Motors 1 dienen dazu, den Drehgeber 5 bzw. die aus seinem Zeitsignal E und R abgeleiteten Einzelimpulse bezüglich des OT-Zeitpunktes zu kalibirieren.

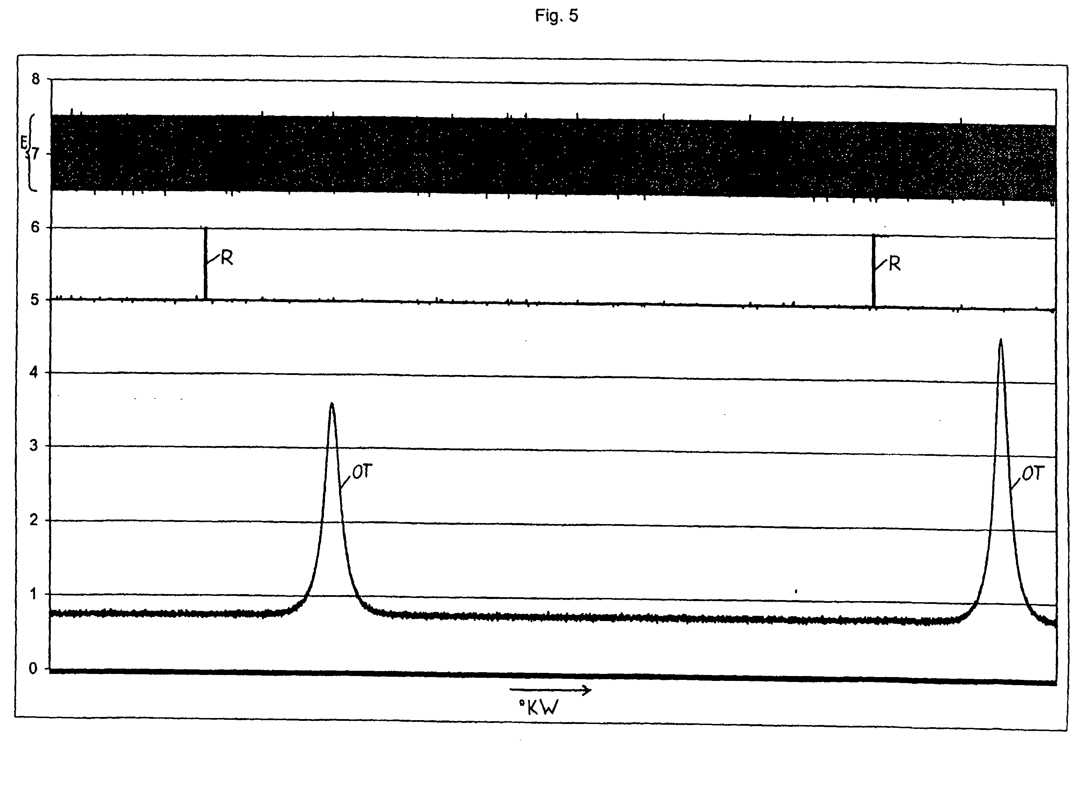

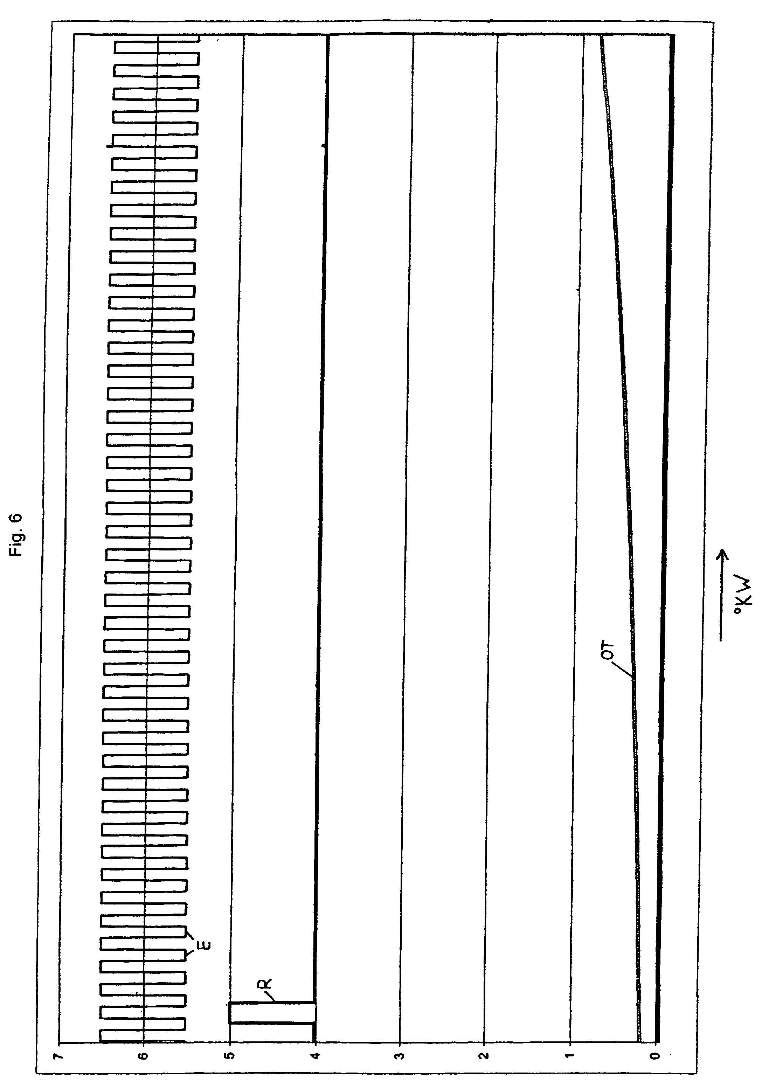

Die verschiedenen Signale E,R und OT sind in den Fig. 5 und 6 gezeigt. In horizontaler Richtung ist in den dortigen Diagrammen der Zeitablauf als Grad Kurbelwinkel (°KW) aufgetragen. Die unterste Kurve in Fig. 5 gibt den in diskrete Einzelwerte digitalisierten Verlauf des vom Sensor 7 gemessenen Signals OT wieder, wobei das erste Maximum dem OT der Kompressionsphase und die zweite Spitze dem Niederdruck-OT nach dem Abgas-Ausstoss des Viertakt-Motors zuzuordnen ist.

Das darüberliegende, als Einzelimpuls erscheinende Signal ist das Referenzsignal R, das jeweils den "Nullpunkt" bei einer Umdrehung der Welle 4 anzeigt.

Ganz oben ist in Fig. 5 ein geschlossenes Band wiedergegeben, das sogenannte Inkrementalsignal, das das erwähnte Winkel- oder Zeitsignal E des Drehgebers 5 ist. Die Vergrösserung oder Zeitdehnung der Fig. 6 veranschaulicht die Auflösung dieses Bandes in die Zeitsignale E des Drehgebers 5; weiterhin ist das Signal R und ein Ausschnitt aus dem Signal OT wiedergegeben.

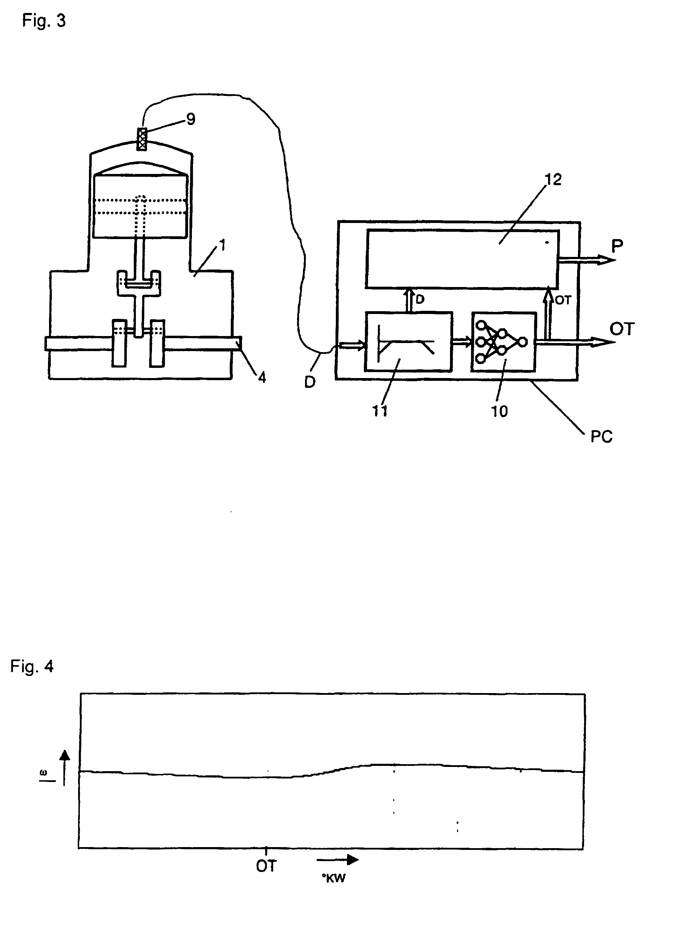

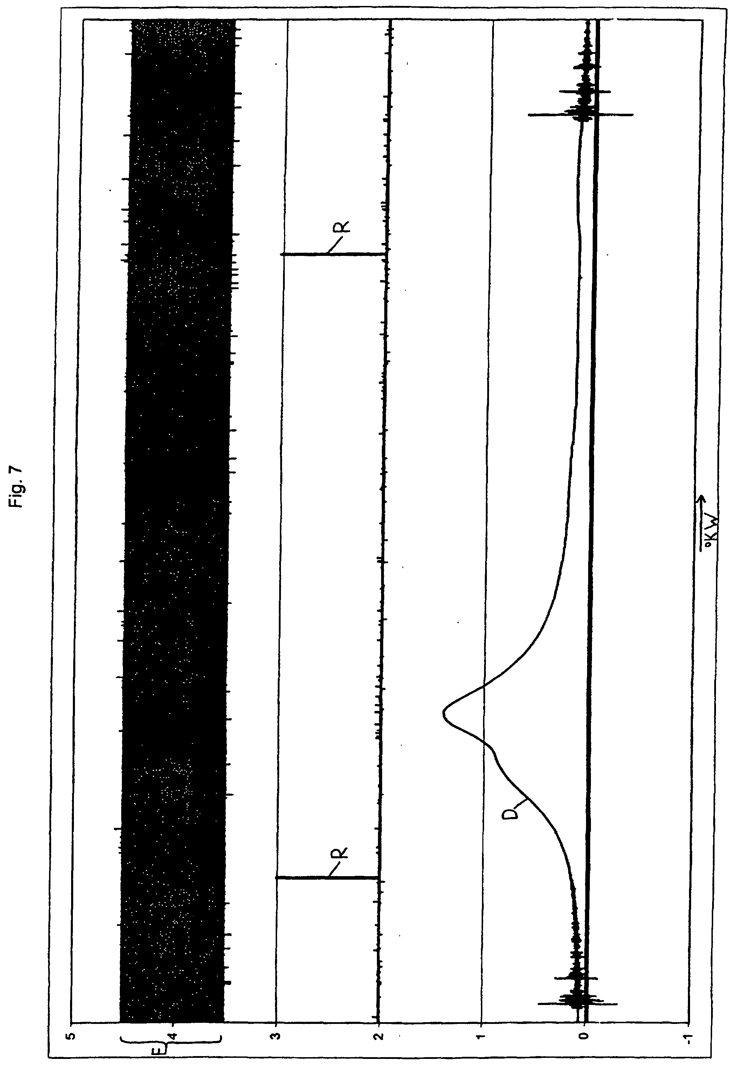

In der Anordnung nach Fig. 2 für die Messdatenaufnahme zum Training und zur Kontrolle der Verallgemeinerungsfähigkeit des als wissensbasiertes System eingesetzten neuronalen Netzes (NN) 10 (Fig. 3), ist der Sensor 7 für die direkte OT-Messung ersetzt durch einen Drucksensor 9, der wiederum ein unter der Typenbezeichnung 7061 erhältliches Produkt der Anmelderin ist. Um die elektrischen Bedingungen oder Eigenschaften während des Trainings und während des Einsatzes für das neuronale Netz 10 möglichst identisch zu gestalten, ist in dem Weg für das Drucksignal D ein Bandbreitenbegrenzer 11 mit möglichst identischen Eigenschaften wie desjenigen im Zielsystem vorgesehen, ehe das Signal D zum Oszilloskop KO gelangt. In diesem wird der gemessene Druckverlauf ebenfalls in digitale Einzelwerte aufgelöst und mit den zugehörigen Werten der Drehgebersignale E und R in einem Speicher abgelegt. Die Messdatenaufnahme, Wertepaarbildung und Datensatzverarbeitung und -Speicherung wird für eine Anzahl verschiedener Betriebszustände durchgeführt, wobei nach einer Verarbeitung der Datenpaare im Rechner PC zu jedem Drucksignal D lediglich die Aussage OT "ja" oder "nein" in Form der Digitalwerte "1" oder "Null" gespeichert wird. Mit OT "ja" wird die Zeit nach dem OT-Zeitpunkt, mit OT "nein" die Zeit vor dem OT-Zeitpunkt gekennzeichnet. Der OT-Zeitpunkt im Datenpaar ist also genau in dem Zeitpunkt, wo der Wechsel von OT "nein" auf OT "ja" staffindet.
Ein Beispiel für eine solche Messdatenaufnahme ist in Fig. 7 wiedergegeben, in der, wie in Fig. 5, in Abhängigkeit von der Zeitwiederum als Grad Kurbelwinkel (°KW) - der Druckverlauf D, das Referenzsignal R und das Band des Zeit- oder Inkrementalsignals E aufgezeichnet sind.

Aus der Menge der gespeicherten Datensätze der Messdatenaufnahme verwendet man nun eine Teilmenge, die einen Teil der gemessenen Betriebszustände verkörpert, zum Training des neuronalen Netzes 10, das beispielsweise in dem Rechner PC verwirklicht ist. Nicht als Beschränkung, sondern lediglich als Beispiel, das wahrscheinlich noch weiter optimiert werden kann, sei das verwendte NN 10 beschrieben. Es handelt sich um ein sogenanntes Feed-Forward-Netzwerk mit 70 Eingangsneuronen, zwei verdeckten oder Hiddenschichten, von denen die erste 6 und die zweite 15 Neuronen aufweist, und einem Ausgangsneuron. Trainiert wird es nach dem bekannten Backpropagation-Lernverfahren mit einem ebenfalls bekannten Lernprogramm (Matlab). Als Ausgangs- oder Aktivierungsfunktion dient für alle Neuronen einheitlich die sigmoide Funktion des Tangens hyperbolicus.

Das Training des Netzes 10 wird so lange fortgesetzt, bis für alle dazu herangezogenen Betriebszustände der Fehler der OT-Erkennung unter einem vorgegebenen Grenzwert liegt.

Das trainierte Netz 10 wird nun auf seine Verallgemeinerungsfähigkeit überprüft. Für die Überprüfung wird das NN 10 mit der Restmenge der gespeicherten Datensätze aus der Messdatenaufnahme, d.h. mit Messdaten, die nicht zu Trainingszwecken herangezogen worden sind, beschickt.

Für jeden nicht trainierten, jedoch bei der Messdatenaufnahme gemessenen Betriebszustand, dessen Wertepaare Drucksignal/OT ja abgespeichert sind, werden die gespeicherten Druckwerte auf die Eingangsneuronen des trainierten - jedoch nach dem Training unverändert belassenen - NN 10 gegeben, dessen Ausgangsneuron dann für jeden dieser Betriebszustände den vom NN 10 aus den Werten des Drucksignals D erkannten OT ausgibt und mit dem dazugehörenden, gespeicherten Wertepaar Drucksignal/OT "ja" oder "nein" vergleicht.

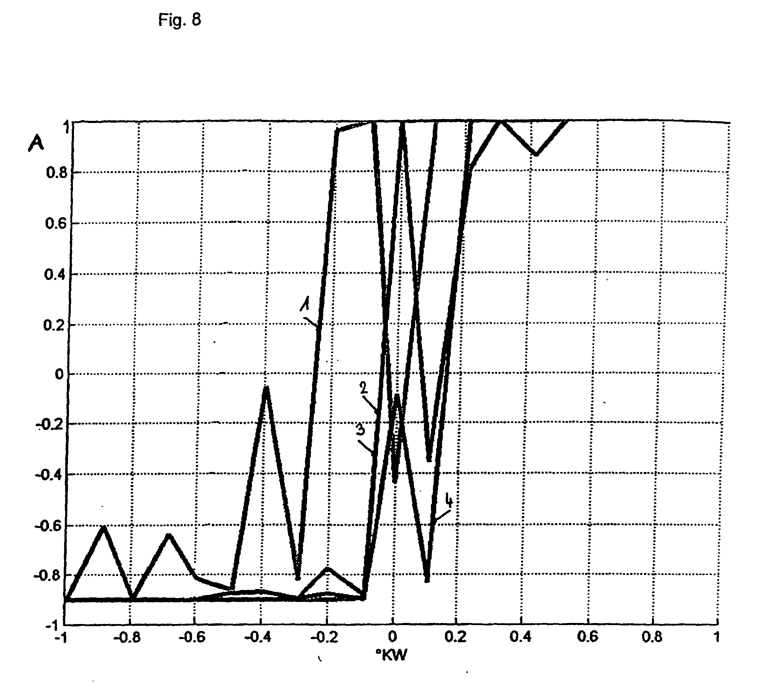

Aus Fig. 8, die - bezogen auf den direkt gemessenen OT als Nullpunkt - die Ausgangsfunktion A des NN 10 zeigt, lässt sich ablesen, dass OT für nicht trainierte Betriebszustände mit einer Genauigkeit von 0.5° KW aus dem Drucksignal D erkannt wird. Abgesehen davon, dass bei einer weiteren Optimierung des Systems diese Genauigkeit noch gesteigert werden kann, reicht die erzielte Genauigkeit für viele Zwecke aus. Für die in Fig. 8 dargestellten Messkurven der Ausgangsfunktion A des unveränderten, trainierten NN 10 für einige nicht trainierte Betriebszustände gilt, dass OT erreicht ist, wenn der Funktionswert A = + 0.9 erstmals erreicht oder überschritten wird.

Da im unmittelbaren Bereich um den OT der Druckverlauf wegen der Brennstoffverbrennung relativ zufällig ist, können für die interne Verarbeitung und Zuordnung der Druckwerte D und der Inkrementalsignale E die Drucksignale D rechnerintern um einen definierten Betrag mit Hilfe eines FIFO-Speichers in bekannter Weise verzögert werden, so dass der OT-Zeitpunkt in die steilere Flanke der Kompressionsphase fällt. Selbstverständlich wird dieser systematische Fehler nach der Erkennung des OT-Zeitpunktes während des Einsatzes, ebenfalls rechnerintern, wieder rückgängig gemacht.

Die Messanordnung nach Fig. 3 dient im späteren "Betrieb" für die OT-Erkennung bei unbekannten Betriebszuständen. Sie enthält als einzigen Messwertaufnehmer den Drucksensor 9, der das Drucksignal D ausgibt und über den - mit demjenigen der Trainings-Datenaufnahme in den elektrischen Eigenschaften möglichst identischen - Bandbreitenbegrenzer 11 dem nach dem Training unveränderten NN 10 zuleitet, welches aus dem Druckverlauf für jeden Betriebszustand den Zeitpunkt für OT bestimmt.

In bekannter Weise lässt sich aus dem Drucksignal D und dem mit dessen Hilfe erkannten OT die Leistung des Zylinders 1 berechnen. Dies geschieht in einer weiteren Berechnungseinheit 12 der Messanordnung nach Fig. 3; die Einheit 12 gibt die berechnete Leistung als Signal P (Fig. 3) aus.

Im einfachsten Fall wird für die Leistungsberechnung eine lineare Zeitskala in °KW, d.h. eine konstante Winkelgeschwindigkeit ω für die Umdrehungen der Kurbelwelle 4, angenommen, wobei diese lineare Skala auf den "erkannten" OT-Zeitpunkt zurückbezogen wird. Wie jedoch die in Fig. 4 wiedergegebene Messung der Winkelgeschwindigkeit ω (Ordinate) in Abhängigkeit vom auf OT zurückbezogenen Kurbelwinkel KW (Abszisse - OT = O -) zeigt, ist diese Vereinfachung nicht ganz korrekt, da die Winkelgeschwindigkeit ω während der Kompressionsphase verlangsamt und nach OT beschleunigt ist, sodass eine wellenförmig gekrümmte Kurve entsteht. Sollte daher die vereinfachende Annahme nicht zulässig sein, so kann mit Hilfe eines weiteren wissensbasierten Systems die Gradskala an die Krümmungen des tatsächlichen Verlaufs der Winkelgeschwindigkeit angepasst werden.

Erfolgen direkte OT-Messungen und Messdatenaufnahmen mit verschiedenen Motorentypen, die unterschiedliche maschinenspezifische Parameter - wie z.B. verschiedene geometrische Abmessungen, wie Kolbenhub und Zylinderbohrungsdurchmesser, aber auch unterschiedliche Verdichtung und/oder andere verschiedene Kenndaten - haben, und werden diese maschinenspezifischen Grössen neben den Innendruckwerten D verschiedener Betriebszustände dem wissensbasierten System über Eingangsneuronen vor dem Training zugeführt - so dass diese Grössen mit zum Training herangezogen werden - so lässt sich die OT-Erkennung des beschriebenen Beispiels auf eine OT-Bestimmung bei allen berücksichtigten Motorentypen ausdehnen. Selbstverständlich ist dafür der Trainingsaufwand vergrössert; das erfindungsgemässe Verfahren wird jedoch nicht verunmöglicht. Auf diese Weise kann der OT oder die Zylinderleistung bei verschiedensten Motoren-typen - wie Grossmotoren für Schiffs- und Generatorantriebe, Motoren für Last- und Personenwagen, aber auch Kleinmotoren, beispielsweise für Rasenmäher - mit einem einmal trainierten wissensbasierten System allein aus dem Zylinderinnendruckverlauf bestimmt werden.

## Patentansprüche

1. Verfahren zur genauen Bestimmung des oberen Totpunktes (OT) einer Brennkraftmaschine (1) aus dem Zylinderinnendruckverlauf (D), wobei an der Maschine (1) in verschiedenen, gemäss ihrer Spezifikation sinnvoll ausgewählten Betriebspunkten der Zylinderinnendruckverlauf (D) und, nach.einer direkten Messung des OT-Zeitpunktes in Grad Kurbelwinkel zugehörige Zeitwerte, ebenfalls in Grad Kurbelwinkel (°KW) gleichzeitig aufgenommen, als digitalisierte Wertepaare einander zugeordnet und in einem Datensatz gespeichert werden, dass der Zylinderinnendruck (D) gegebenenfalls zusammen mit maschinenspezifischen Parametern als Eingangsgrössen einem wissensbasierten System (10) zugeführt wird, dessen Ausgang einen bestimmten Wert für den OT-Zeitpunkt ausgibt, dass das System (10) so lange mit Elementen aus dem Datensatz trainiert wird, bis es aus dem Zylinderinnendruck (D) den zugeordneten OT-Zeitpunkt der direkten Messung bei allen zu Trainingszwecken verwendeten Betriebspunkten, sowie gegebenenfals auch für unterschiedliche maschinenspezifische Parameter, mit einer geforderten Genauigkeit erkennt, und dass schliesslich aus dem gemessenen Zylinderinnendruck (D) in nicht trainierten Betriebspunkten, und gegebenenfalls mit unterschiedlichen, maschinenspezifischen Parametern, der OT-Zeitpunkt mit Hilfe des unveränderten, aber trainierten, wissensbasierten Systems (10) ermittelt wird.

2. Verfahren nach Anspruch 1, **dadurch gekennzeichnet, dass** für Maschinen eines Maschinentyps, bei denen die maschinenspezifischen Parameter gleich sind, nur der Zylinderinnendruckverlauf (D) als Eingangsgrösse zum Trainieren des Systems (NN 10) und für die OT-Erkennung durch das trainierte System (NN 10) benutzt wird.

3. Verfahren nach einem der Ansprüche 1 oder 2, **dadurch gekennzeichnet, dass** der Verlauf des Zylinderinnendrucks (D) gegenüber dem OT-Zeitpunkt während des Trainings des Systems (NN) definiert zeitlich verzögert wird, und dass ferner dieser gewollte, systematische Fehler während des Betriebs mit dem unveränderten, trainierten, wissenbasierten System (NN 10) rückgängig gemacht wird.

4. Verfahren nach einem der Ansprüche 1 bis 3, **dadurch gekennzeichnet, dass** die elektrischen Eigenschaften (11) der Messanordnung bei der Aufnahme des Zylinderdruckverlaufes (D) und der direkten OT-Zeitpunkt-Messung einerseits, und während des Betriebes mit wissensbasierten Systemen (NN 10) andererseits, möglichst identisch gestaltet werden.

5. Verfahren nach einem der Ansprüche 1 bis 4, **dadurch gekennzeichnet, dass** für die Berechnung der Leistung im Zylinder (1) der Verlauf des Zylinderinnendrucks (D) mit einer Skala in Grad Kurbelwinkel (°KW) kombiniert wird, die auf den aus dem Zylinderinnendruck (D) ermittelten OT-Zeitpunkt zurückbezogen wird.

## Claims

1. A method for the precise determination of the top dead centre (OT) of an internal combustion engine (1) by means of the variation of the internal cylinder pressure (D) wherein to the engine (1), at different operating points reasonably selected according to its specification, the variation of the internal cylinder pressure (D) and, after a direct measurement of the top dead centre time point, in degrees crank angle, correlated time values simultaneously measured also in degrees crank angle (°KW) are assigned to each other in the form of digitalized pairs of variates and are memorized in a data set, wherein the internal cylinder pressure (D) optionally together with engine-specific parameters is supplied as the input values to a knowledge-based system (10) the output of which provides a distinct value for the top dead centre time point, wherein the system (10) is trained with elements of the data set for a time sufficient to recognize from the internal cylinder pressure (D) the assigned top dead centre time point of the direct measurement at all operating points used for training purposes and optionally also for different engine-specific parameters with a required precision, and wherein finally from the internal cylinder pressure (D) measured at operating points not used for training and optionally with other engine-specific parameters the top dead centre time point is determined by means of the unchanged, but trained knowledge-based system (10).

2. The method according to claim 1 **characterized in that** for engines of one engine type which have the same engine-specific parameters only the variation of the internal cylinder pressure (D) is used as the input value for training the system (NN 10) and for top dead centre recognition by the trained system (NN 10).

3. The method according to any of the claims 1 or 2 **characterized in that** during training of the system (NN) the variation of the internal cylinder pressure (D) is delayed in time in a defined manner with respect to the top dead centre time point and that furthermore this intentional systematic error during operation is reversed by means of the unchanged, trained, knowledge-based system (NN 10).

4. The method according to any of the claims 1 to 3 **characterized in that** the electric properties (11) of the set-up of measuring instruments during recording of the variation of the internal cylinder pressure (D) and the direct measurement of the top dead centre time point on the one hand and during operation with knowledge-based systems (NN 10) on the other hand are set up as identical as possible.

5. The method according to any of the claims 1 to 4 **characterized in that** for calculating the power in the cylinder (1) the variation of the internal cylinder pressure (D) is combined with a scale in degrees crank angle (°KW) which is related to the top dead centre time point determined from the internal cylinder pressure (D).

## Revendications

1. Procédé pour la détermination exacte du point mort haut (OT) d'un moteur à combustion interne (1) à partir de la courbe de pression intérieure de cylindre (D), la courbe de pression intérieure de cylindre (D) étant enregistrée sur la machine à différents moments de service sélectionnés judicieusement selon leur spécification et, après une mesure directe du moment du point mort haut, en degrés d'angle de vilebrequin, des valeurs de temps spécifiques étant enregistrées simultanément également en degré d'angle du vilebrequin, étant attribuées réciproquement sous la forme de paires de valeurs numérisées et étant stockées dans un ensemble de données, de sorte que la pression intérieure de cylindre (D) est amenée éventuellement en même temps que des paramètres spécifiques à la machine sous la forme de grandeurs d'entrée à un système basé sur le savoir (10), dont la sortie émet une valeur déterminée pour le moment du point mort haut, que le système (10) est entraîné avec des éléments provenant de l'ensemble de données jusqu'à ce que, à partir de la pression intérieure de cylindre (D), le système reconnaisse avec une précision exigée le moment du point mort haut attribué de la mesure directe pour tous les points de service utilisés à des fins d'entraînement et éventuellement également pour différents paramètres spécifiques à la machine, et que, enfin, à partir de la pression intérieure de cylindre mesurée (D), en des points de service non entraînés, et éventuellement avec différents paramètres spécifiques à la machine, le moment du point mort haut est déterminé à l'aide du système non modifié, mais entraîné, et basé sur le savoir (10).

2. Procédé selon la revendication 1, **caractérisé en ce que**, pour des machines d'un type de machine, pour lesquelles les paramètres spécifiques à la machine sont identiques, seule la courbe de la pression intérieure de cylindre (D) est utilisée comme grandeur d'entrée pour l'entraînement du système (NN 10) et pour la détection du point mort haut par le système entraîné (NN 10).

3. Procédé selon l'une quelconque des revendications 1 ou 2, **caractérisé en ce que** la courbe de la pression intérieure du cylindre (D) par rapport au moment du point mort haut est retardée dans le temps de façon définie pendant l'entraînement du système (NN) et que également cette erreur systématique et voulue est supprimée pendant l'exploitation avec le système (NN 10) non modifié, entraîné et basé sur le savoir.

4. Procédé selon l'une quelconque des revendications 1 à 3, **caractérisé en ce que** les propriétés électriques (11) du dispositif de mesure sont conçues les plus identiques possibles d'une part lors de l'enregistrement de la courbe de pression du cylindre (D) et de la mesure directe du moment du point mort haut et d'autre part pendant l'exploitation avec des systèmes basés sur le savoir (NN 10).

5. Procédé selon l'une quelconque des revendications 1 à 4, **caractérisé en ce que**, pour le calcul de la puissance dans le cylindre (1), la courbe de la pression intérieure de cylindre (D) est combinée avec une échelle graduée en degrés d'angle de vilebrequin, qui est rapportée au moment du point mort haut déterminé à partir de la pression intérieure du cylindre (D).
